# EUROPEAN PATENT SPECIFICATION

(11) **EP 3 372 123 B1**
(45) Date of publication and mention of the grant of the patent: **22.01.2020**
(21) Application number: 18000224.8
(22) Date of filing: 07.03.2018
(51) Int. Cl.: A47J 31/06

(54) **REMOVABLE FILTER HOLDER FOR BEVERAGE PREPERATION MACHINES**
ENTFERNBARER FILTERHALTER FÜR GETRÄNKEMASCHINEN
PORTE-FILTRE AMOVIBLE POUR MACHINES DE PRÉPARATION DE BOISSONS

(30) Priority: 08.03.2017 IT 201700025740
(43) Date of publication of application: 12.09.2018
(73) Proprietor: BARDAZZI, Bruno, 50059 Vinci FI (IT)
(72) Inventor: BARDAZZI, Bruno, 50059 Vinci FI (IT)
(74) Representative: Leucci, Lidia

(56) References cited:
- EP-A1- 1 656 861
- EP-A1- 2 641 516
- CA-A1- 2 121 998

## Description

The present invention relates to household appliances, and in particular it concerns a machine for preparing beverages; more particularly, the present invention relates to a removable filter holder intended for use in a machine for the preparation of beverages.

By the term filter holder in machines for preparing beverages is normally designated that device which allows to put a charge, prepacked or not, of powdered edible material intended to combine, by dissolution or infusion, with water to make a beverage .

There are numerous models of machines for the preparation of beverages, and among these numerous have removable filter holder means. These means have the undoubted advantage of being able to easily extract the charge of exhausted edible material, and to allow the same filter holder to be cleaned in a completely effective manner. An obvious disadvantage is linked to the fact that it is not possible to prevent the dripping of the liquid still contained inside the filter holder after dispensing the beverage, which flows from the opening normally allowing the beverage to be dispensed to the container designated for its collection, whether it is a dispensing nozzle or simply a passage which allows dispensing from the means provided in the prepacked charge of the edible material used in the beverage preparation machine.

Document EP-A-2641516 discloses a removable filter holder according to the preamble of independent claim 1.

It is an aim of the present invention to provide a removable filter holder for beverage preparation machines, in which the dispensing aperture is protected against dripping.

An object of the present invention is therefore a removable filter holder for machines for preparing beverages, comprising gripping means, a compartment for positioning a charge of edible material intended for infusion or dissolution by means of water, an opening for dispensing the prepared beverage; said filter holder further comprises means for temporarily obstructing said opening, which can be operated manually and made so as not to interfere with the delivery of the beverage.

According to the invention said obstruction means are normally open, and are arranged in obstruction of said opening by manual actuation means, associated with said gripping means.

Said obstruction means may comprise an oscillating cover, pivoted to said filter holder. In an executive variant, the obstruction means are formed in a drawer, able to intercept or not the said dispensing aperture. In a further variant, said obstruction means comprise gate means which throttle an elastically deformable conduit, therefore obstructing it.

The means for actuating said obstruction means comprises levers coupled with said obstruction means, pivoted into said filter-holder, and provided with elastic yielding means, able to forcing their return to the initial position. In an embodiment variant, said actuation means comprise a toothed spool coupled to said obstruction means, and a rack which can be operated by the user.

Further advantages and features of the device according to the present invention will be apparent from the following description of some embodiments thereof, given by way of non-limiting example with reference to the attached drawings, in which:
Figure 1 is a top perspective view of a first embodiment of the filter holder according to the present invention, in a first configuration;
Figure 2 is a perspective view from below of the filter holder of Figure 1;
Figure 3 is a longitudinal sectional view of the filter holder of Figure 1, in a second configuration;
Figure 4 is a perspective view from below of a second embodiment of the filter holder according to the invention, in a first configuration;
Figure 5 is a longitudinal sectional view of the filter holder of Figure 4, in a second configuration;
Figure 6 is a side elevational view of a third embodiment of the filter holder of the invention, in a first configuration;
Figure 7 is a longitudinal sectional view of the filter holder of Figure 6, in a second configuration;
Figure 8 is a perspective view from below of a fourth embodiment of the filter holder of the invention, in a first configuration; and
Figure 9 is a longitudinal sectional view of the filter holder of Figure 8.

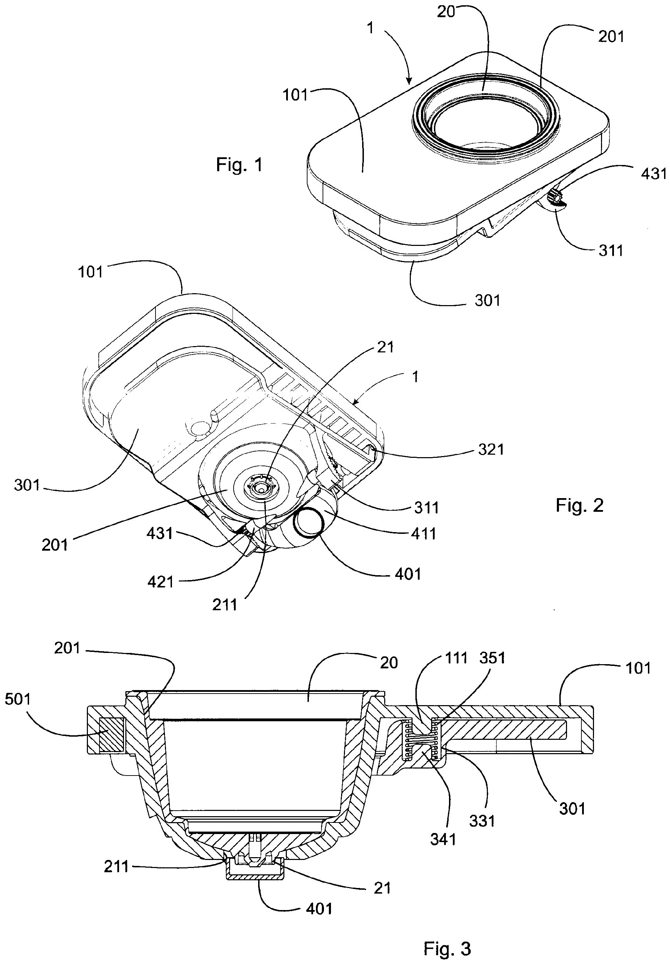

Figure 1 shows a first embodiment of the filter holder according to the present invention. Reference 1 designates the body of the filter holder, provided with gripping means 101 and a compartment 201 for containing the charge of edible material, in this case a prepacked charge 20. To the body 1 is coupled, in the manner described below, the lever 301, which carries the rack arm 311 cooperating with the spool 431.

In figure 2 the perspective from below clarifies better the structure of the filter holder 1; to the equal parts correspond equal numerals. The figure shows how the lever 301 is pivoted oscillating at 321 with respect to the body 1, and as the compartment 201 is provided with a dispensing opening 211 on which faces the dispensing nozzle 21 integrated in the prepacked charge 20. The spools 431 previously described are coupled to pins 421, which in turn are connected to the arms 411 of the cover 401, which in this configuration does not obstruct the dispensing opening 211.

A further explanation of the structure of the filter holder 1 is provided by the longitudinal section of Figure 3, in which likewise equal parts correspond to the same numerals. In this configuration, the lever 301 is raised towards the handle 101 of the filter holder, thereby operating the racks 311 and the spools 431, and thus allowing the cover 401 to oscillate in the obstruction position of the opening 211. Between the lever 301 and the handle 101 of the filter holder 1 is placed a spring 351, arranged between a tang 341 formed in a cavity 331 of the lever and a tang 111 protruding from said handle 101. The spring 351 allows to keep the lid 401 normally in the configuration illustrated in Figure 2. The filter holder is provided at the end diametrically opposite to the gripping means 101 of a magnet 501, suitable for cooperating with similar means in the housing of the beverage preparation machine designed to cooperate with the filter holder.

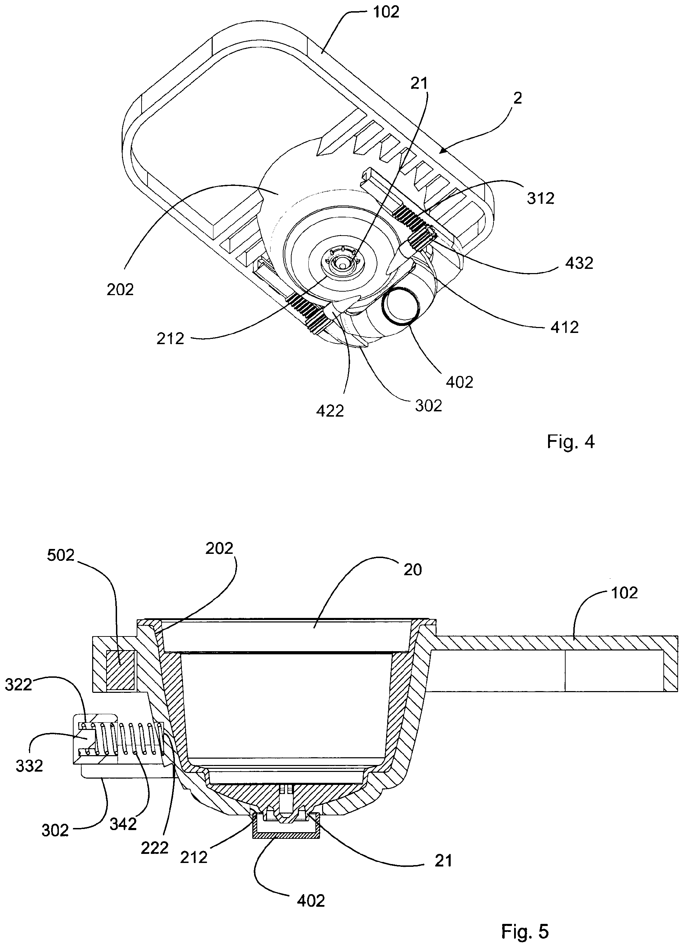

Figure 4 illustrates a second embodiment of the filter holder according to the present invention; 2 indicates the body of the filter holder, provided with gripping means 102, and with the housing compartment 202 of the prepacked charge of material suitable for the preparation of beverages, provided on the bottom of a dispensing opening 212 which cooperates similarly to what is illustrated in the figures 2 and 3, with the dispensing nozzle 21 of the charge 20, here not visible in its entirety. The cover 402, which is able to obstruct the opening 212, which is shown here in open configuration, is arranged on the arms 412 which oscillate on the pins 422 on which the toothed spools 432 are keyed, in turn actuated by the racks 312 arranged on the two arms of the bracket 302, arranged sliding with respect to the body 2 of the filter holder.

In the longitudinal section of Figure 5, which shows the filter holder 2 with the cover 402 in obstruction configuration of the dispensing opening 212, the operation of the embodiment described here appears clearly; The lid 402 is in the obstruction configuration as shown in the figure when the filter holder is withdrawn from the machine. When the bracket 302 comes in contact with the back wall of the compartment of the beverage preparation machine intended to house the filter holder, the racks 312 actuate the rotation of the pins 422, and hence the oscillation of the arms 412 and the displacement of the lid 402 in the open configuration shown in Figure 4. The spring 342, compressed between the cavities 222 of the filter holder and 322 of the bracket 302, will ensure the return in the configuration of Figure 5 once the filter holder is taken out of the machine. Also in this case, the magnet 502 guarantees the stability of the temporary coupling between the filter holder 2 and the machine.

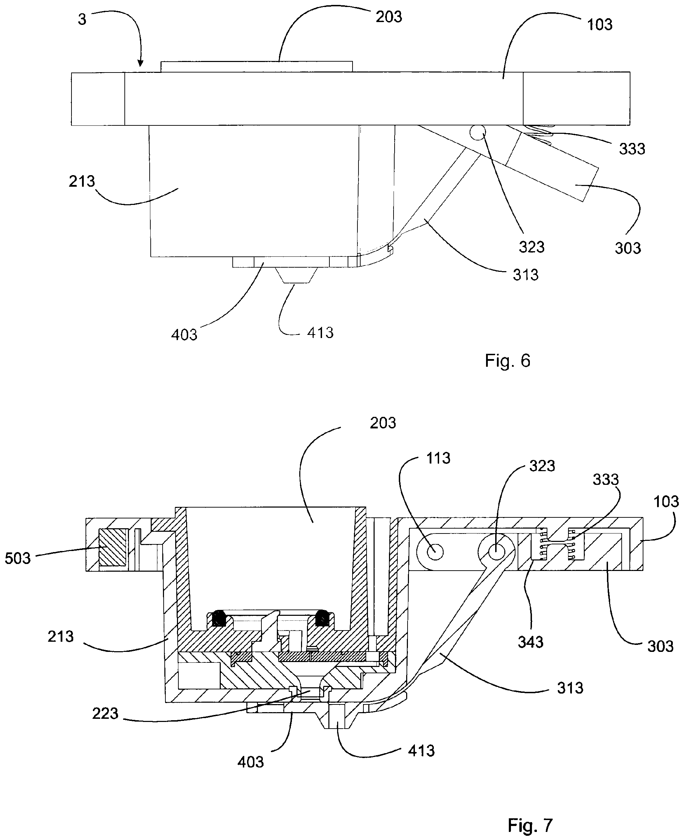

Figure 6 illustrates a third embodiment of the filter-holder according to the present invention. The body of the filter holder 3 is provided with a handle 103 and a compartment 203 for housing the prepacked charge, inserted in an external tunic 213. At the bottom of the tunic 213 is the movable member 403 which carries the dispensing nozzle 413 and is coupled by the flexible string 313 to the lever 303 hinged to the body 3 of the filter holder, and provided with a loading spring 333.

In the configuration illustrated in Figure 7 the operation of this embodiment is clarified. The dispensing nozzle, which in the configuration shown here does not coincide with the dispensing opening 223, formed in the tunic 213 of the compartment 203, which allows the flow of the beverage; the said beverage is dispensed using the dispensing unit shown here, per se known and not better described. When the lever is released, the nozzle 413 moves and thus allows the outflow of the beverage, while the actuation of the lever 303 allows in fact to avoid dripping in the operations for emptying the filter holder. The spring 333, compressed in the compartment 343 of the lever 303, will allow the return in the configuration which does not obstruct the opening 223.

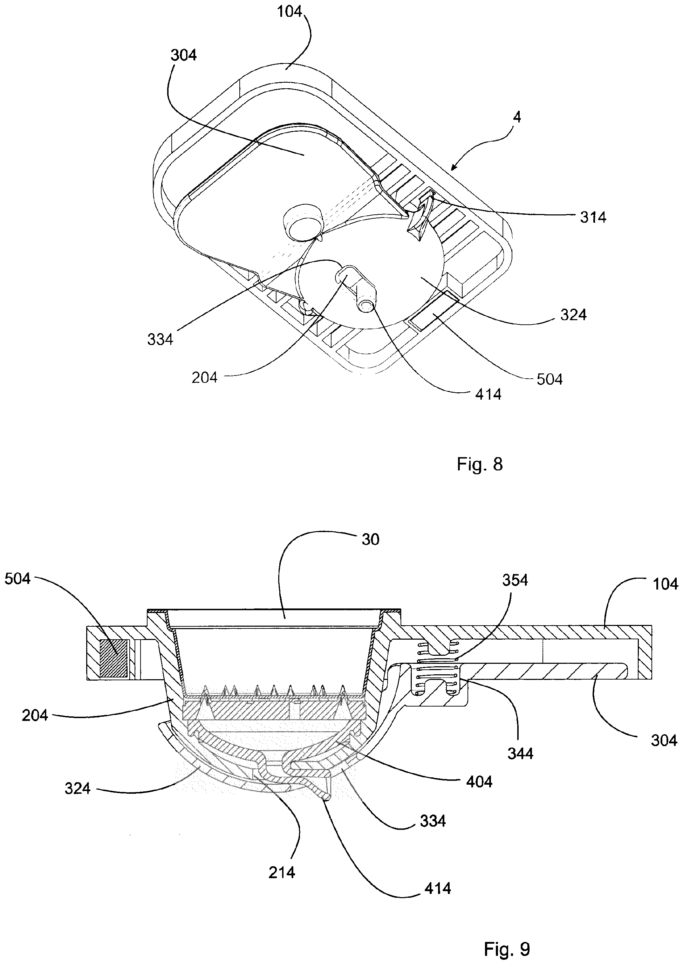

Figure 8 shows the fourth embodiment of the filter holder according to the present invention; 4 indicates the body of the filter holder which comprises handle means 104 and a compartment 204 for housing the prepacked charge of edible material. The oscillating plate 304 is engaged to the body 4 of the filter holder by means of the arms 314; said plate has a dome cavity 324 which almost completely covers said compartment 204, except at the bottom where it has a window 334 which is crossed by the spout 414 of flexible material.

The longitudinal section in the obstruction configuration illustrated in Figure 9 clarifies the operation of the present embodiment. The opening 214 on the bottom of the compartment 204 allows the passage to the flexible spout 414, terminal of the funnel-shaped gasket 404, placed on the bottom of the infusion chamber inserted in the compartment 204, of a per se known type and here not better described. When the plate 304 is lifted, the dome 324 slides onto the compartment 204 until the flexible spout 414 is throttled, effectively obstructing the flow from the same compartment 204. The spring 354 allows the plate 304 to return to the unobstructed configuration shown in Figure 8.

The filter holder according to the present invention is illustrated here considering the use of prepacked charges with a rigid casing, but could easily be adopted in machines which use prepacked charges of flexible material or which directly use the loose edible material.

## Claims

1. A removable filter holder (1; 2; 3; 4) for beverage preparation machines, comprising handle means (101; 102; 103; 104); a compartment (201; 202; 203; 204) for positioning a
charge of edible material for infusion or dissolution by water, an opening (211; 212: 223; 214) for dispensing the prepared beverage, wherein said filter holder further comprises temporary means for obstructing said opening (401; 403; 414), which can be actuated manually by means of suitable means, and made so as not to interfere with the dispensing of the beverage, wherein said obstruction means (401; 403; 414) are normally open and move to obstruct the said opening by means of manual actuating means (301; 303; 304) associated with said handle means (101; 103; 104), and wherein the means for actuation of said obstruction means comprise a lever (301; 303; 304) coupled with said obstruction means (401; 403; 404), **characterised in that** said lever is pivoted (321; 113; 314) in said filter holder, and provided with elastic loading means (331; 333; 354), capable of forcing the return to the initial position corresponding to the unobstructed configuration of said obstruction means.

2. Filter holder according to claim 1, wherein said obstruction means comprise an oscillating cover (401; 402), pivoted to said filter holder.

3. Filter holder according to claim 1, wherein the obstruction means (403) are formed by a drawer, capable of intercepting the dispensing opening (223).

4. Filter holder according to claim 1, wherein said obstruction means (414) comprise an elastically deformable conduit which is throttled by means of a gateway means.

## Patentansprüche

1. Abnehmbarer Filterhalter (1; 2; 3; 4) für Getränkezubereitungsmaschinen, umfassend Griffmittel (101; 102; 103; 104); eine Kammer (201; 202; 203; 204) zum Positionieren einer Charge von essbarem Material zur Infusion oder Auflösung durch Wasser, eine Öffnung (211; 212: 223; 214) zum Ausgeben des zubereiteten Getränks, wobei der Filterhalter ferner temporäre Mittel umfasst zum behindern der Öffnung (401; 403; 414), die manuell oder automatisch mittels geeigneter Mittel betätigt werden kann und so hergestellt ist, dass sie die Ausgabe des Getränks nicht stört, wobei die Hindernismittel (401; 403; 414) normalerweise offen sind und sich bewegen, um die Öffnung mittels manueller Betätigungsmittel (301; 303; 304) zu versperren, die den Griffmitteln (101; 103; 104) zugeordnet sind, und wobei die Mittel zur Betätigung der Hindernismittel einen Hebel (301; 303; 304) umfasst, gekoppelt mit dem Hindernismittel (401; 403; 404), **dadurch gekennzeichnet, dass** der Hebel in dem Filterhalter verschwenkt (321; 113; 314) und mit elastischen Belastungsmitteln (331; 333; 354) versehen ist , in der Lage, die Rückkehr in die entsprechende Ausgangsposition zu erzwingen auf die ungehinderte Konfiguration der Verstopfungsmittel.

2. Filterhalter nach Anspruch 1, wobei das Hindernismittel eine oszillierende Abdeckung (401; 402) aufweist, die an dem Filterhalter angelenkt ist.

3. Filterhalter nach Anspruch 1, bei dem die Hindernismittel (403) durch eine Schublade gebildet sind, die die Ausgabeöffnung (223) abfangen kann.

4. Filterhalter nach Anspruch 1, bei dem die Hindernismittel (414) eine elastisch verformbare Leitung umfassen, die mittels eines Zugangsmittels gedrosselt wird.

## Revendications

1. Porte-filtre amovible (1; 2; 3; 4) pour machines de préparation de boissons, comprenant des moyens de préhension (101; 102; 103; 104); un compartiment (201; 202; 203; 204) pour positionner une charge de matière comestible pour infusion ou dissolution dans de l'eau, une ouverture (211; 212: 223; 214) pour distribuer la boisson préparée, dans laquelle ledit support de filtre comprend en outre des moyens temporaires pour obstruer ladite ouverture (401; 403; 414), qui peut être actionnée manuellement ou automatiquement au moyen d'un moyen approprié, et réalisé de manière à ne pas gêner la distribution de la boisson, dans lequel ledit moyen d'obstruction (401; 403; 414) sont normalement ouverts et se déplacent pour obstruer ladite ouverture au moyen de moyens d'actionnement manuels (301; 303; 304) associés auxdits moyens de préhension (101; 103; 104), et dans lequel les moyens d'actionnement desdits moyens d'obstruction comprennent un levier (301; 303; 304) couplé auxdits moyens d'obstruction (401; 403; 404), **caractérisé en ce que** ledit levier est pivoté (321; 113; 314) dans ledit porte-filtre et est pourvu de moyens de chargement élastiques (331; 333; 354), capable de forcer le retour à la position initiale correspondant à la configuration non obstruée desdits moyens d'obstruction.

2. Porte-filtre selon la revendication 1, dans lequel ledit moyen d'obstruction comprend un couvercle oscillant (401; 402) pivoté sur ledit porte-filtre.

3. Porte-filtre selon la revendication 1, dans lequel les moyens d'obstruction (403) sont formés par un tiroir, capable d'intercepter l'ouverture de distribution (223).

4. Porte-filtre selon la revendication 1, dans lequel ledit moyen d'obstruction (414) comprend un conduit élastiquement déformable qui est étranglé au moyen d'un moyen de portillon.
